# EUROPÄISCHE PATENTANMELDUNG

(11) **EP 3 699 703 A1**
(43) Veröffentlichungstag der Anmeldung: **26.08.2020**
(21) Anmeldenummer: 19157944.0
(22) Anmeldetag: 19.02.2019
(51) Int. Cl.: G05B 19/416

(54) **VERFAHREN ZUM EINSTELLEN VON SCHNITTWERTDATEN EINER WERKZEUGMASCHINE**

(71) Anmelder: Siemens Aktiengesellschaft, 80333 München (DE)
(72) Erfinder: Scheuermann, Uwe, 90431 Nürnberg (DE)

(57) **Zusammenfassung**

Die Erfindung betrifft ein Verfahren zum Betreiben einer Werkzeugmaschine (10), z.B. Fräsmaschine, wobei wenigstens ein Wert einer Variablen, insbesondere die Schnittwertdaten (32), z.B. der Vorschub und/oder die Drehzahl des Werkzeugs (16), automatisch eingestellt wird. Anhand der Eingabe vom Benutzer , welche das Werkstück (12), z.B. Geometriedaten, und die vorgesehene Relativbewegung zwischen dem Werkzeug (16) und dem Werkstück (12), z.B. Bahn, charakterisiert, werden automatisch die Schnittwertdaten (32), z.B. der Vorschub und/oder die Drehzahl des Werkzeugs (16) ermittelt , insbesondere durch Senden der Eingabedaten an eine externe Recheneinheit (34), welche eine vom Werkzeughersteller betriebene Recheneinheit sein kann, die automatisch die Schnittwertdaten (32) ermittelt und an die Werkzeugmaschine (10) zurücksendet. Die Idee der Erfindung liegt in der direkten Verknüpfung der Steuerung der Werkzeugmaschine (10) mit der externen Recheneinheit (34), wodurch der Benutzer nicht mehr die Schnittwertdaten (32) manuell ermittelt.

## Beschreibung

Die Erfindung betrifft ein Verfahren zum Betreiben einer Werkzeugmaschine. Des Weiteren betrifft die Erfindung eine solche Werkzeugmaschine, Computerprogramme sowie computerlesbare Medien. Die Erfindung betrifft außerdem ein Verfahren zum Bereitstellen von Schnittwertdaten für eine Werkzeugmaschine.

Werkzeugmaschinen sind aus dem allgemeinen Stand der Technik bereits hinlänglich bekannt. Eine solche Werkzeugmaschine umfasst üblicherweise wenigstens einen Antrieb, mittels welchem zumindest ein Werkzeug antreibbar und dadurch relativ zu einem mittels der Werkzeugmaschine zu bearbeitenden Werkstück bewegbar ist. Hierdurch kann zumindest ein Teilbereich des Werkstücks mittels des Werkzeugs und somit mittels der Werkzeugmaschine bearbeitet werden. Hierzu wird das Werkzeug mittels des Antriebs relativ zu dem Werkstück bewegt, während das Werkzeug das Werkstück zumindest intermittierend berührt.

Um ein Werkstück mittels einer Werkzeugmaschine bearbeiten zu können, sind üblicherweise sehr umfangreiche und somit zeitintensive Tätigkeiten von einer die Werkzeugmaschine betätigenden beziehungsweise bedienenden Person durchzuführen, sodass üblicherweise ein Werkstück nur sehr zeit- und kostenaufwendig mittels einer Werkzeugmaschine bearbeitet werden kann.

Aufgabe der vorliegenden Erfindung ist es daher, ein Verfahren zum Betreiben einer Werkzeugmaschine, eine solche Werkzeugmaschine, ein Verfahren zum Bereitstellen von Schnittwerten für eine Werkzeugmaschine sowie Computerprogramme und computerlesbare Medien bereitzustellen, um Werkstücke mittels Werkzeugmaschinen besonders zeit- und somit kostengünstig bearbeiten zu können.

Diese Aufgabe wird erfindungsgemäß durch ein Verfahren mit den Merkmalen des Patentanspruchs 1, durch eine Werkzeugmaschine mit den Merkmalen des Patentanspruchs 10, durch ein Computerprogramm mit den Merkmalen des Patentanspruchs 11, durch ein computerlesbares Medium mit den Merkmalen des Patentanspruchs 12, durch ein Verfahren mit den Merkmalen des Patentanspruchs 13, durch ein Computerprogramm mit den Merkmalen des Patentanspruchs 14 und durch ein computerlesbares Medium mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben einer Werkzeugmaschine, welche wenigstens einen Antrieb aufweist. Mittels des Antriebs ist in Abhängigkeit von wenigstens einer auch als Parameter bezeichneten Variablen wenigstens eine Relativbewegung zwischen zumindest einem Werkzeug und zumindest einem Werkstück bewirkbar, um dadurch, insbesondere in Abhängigkeit von der Variablen, das Werkstück mittels des Werkzeugs zu bearbeiten.

Beispielsweise ist mittels des Antriebs das Werkzeug antreibbar und dadurch relativ zu dem mittels des Antriebs und mittels des Werkzeugs und somit mittels der Werkzeugmaschine zu bearbeitenden Werkstück bewegbar, um dadurch das Werkstück zu bearbeiten. Es ist denkbar, dass mehrere Antriebe vorgesehen sind. Insbesondere können mehrere Achsen vorgesehen sein, entlang welchen jeweils wenigstens eine Relativbewegung zwischen dem Werkzeug und dem Werkstück bewirkbar ist, wobei beispielsweise je Achse wenigstens oder genau ein Antrieb vorgesehen ist, mittels welchem entlang der jeweiligen Achse wenigstens eine Relativbewegung zwischen dem Werkzeug und dem Werkstück bewirkbar ist. Außerdem kann für das Werkzeug selbst und/oder für das Werkstück selbst ein Antrieb vorgesehen sein, um das Werkzeug beziehungsweise das Werkstück selbst, insbesondere im Raum, zu bewegen.

Mit anderen Worten kann das Werkstück zumindest in einem Teilbereich des Werkstücks bearbeitet werden, indem der Antrieb wenigstens eine Relativbewegung zwischen dem Werkzeug und dem Antrieb bewirkt, insbesondere während das Werkzeug das Werkstück, insbesondere zumindest intermittierend, berührt. Dabei ist der Antrieb in Abhängigkeit von der Variablen betreibbar, insbesondere mittels einer elektronischen Recheneinrichtung. Mit anderen Worten wird während des Bearbeitens des Werkstücks der Antrieb in Abhängigkeit von der Variablen betrieben. Die Variable ist dabei einstellbar, das heißt vorgebbar. Dies bedeutet, dass wahlweise beziehungsweise bedarfsweise unterschiedliche Werte der Variablen vorgegeben beziehungsweise eingestellt werden können. Hierdurch können der Betrieb des Antriebs und somit die Relativbewegung zwischen dem Werkzeug und dem Werkstück variiert werden. Mit anderen Worten kann durch Einstellen beziehungsweise Variieren der Variablen beziehungsweise durch Einstellen beziehungsweise Variieren des Werts der Variablen der Betrieb des Antriebs, das heißt die Art und Weise, auf die der Antrieb betrieben wird, variiert werden. Es ist denkbar, dass wenigstens eine weitere oder mehrere weitere Variablen vorgesehen sind, wobei mittels des Antriebs oder mittels der Antriebe wenigstens eine Relativbewegung oder mehrere Relativbewegungen, insbesondere entlang der jeweiligen Achse, zwischen dem Werkzeug und dem Werkstück in Abhängigkeit von den Variablen bewirkbar ist beziehungsweise sind, um das Werkstück mittels des Werkzeugs zu bearbeiten. Die vorigen und folgenden Ausführungen zu der ersten Variablen sind ohne weiteres auch auf die weiteren Variablen übertragbar und umgekehrt.

Bei einem ersten Schritt des Verfahrens wird mittels einer beziehungsweise der elektronischen Recheneinrichtung, welche beispielsweise Bestandteil der Werkzeugmaschine sein kann, wenigstens eine durch eine beispielsweise die Werkzeugmaschine bedienende Person bewirkte Eingabe empfangen beziehungsweise erfasst. Die Eingabe charakterisiert die wenigstens eine mittels des Antriebs zu bewirkende und zum Bearbeiten zumindest eines Teilbereiches des Werkstücks vorgesehene beziehungsweise zu bewirkende Relativbewegung zwischen dem Werkzeug und dem Werkstück.

Insbesondere kann die Eingabe wenigstens eine mittels des Antriebs zu bewirkende und zum Bearbeiten zumindest des Teilbereichs des Werkstücks vorgesehene sowie vorzugsweise relativ zu dem Werkstück erfolgende Bewegung des Werkzeugs. Hierzu gibt die Person beispielsweise sogenannte geometrische Daten in die Recheneinrichtung, insbesondere in die Eingabeeinrichtung, ein. Insbesondere wird die Eingabe mittels einer Eingabeeinrichtung der elektronischen Recheneinrichtung empfangen beziehungsweise erfasst. Vorzugsweise ist die elektronische Recheneinrichtung dazu ausgebildet, die Werkzeugmaschine, insbesondere den Antrieb, auf Basis beziehungsweise in Abhängigkeit von der Variablen zu betreiben. Hierunter kann insbesondere verstanden werden, dass die elektronische Recheneinrichtung dazu ausgebildet ist, den Antrieb in Abhängigkeit von der Variablen, insbesondere in Abhängigkeit von dem Wert der Variablen, anzusteuern und dadurch zu betreiben. Hierzu ist beziehungsweise wird beispielsweise der Wert der Variablen gespeichert, insbesondere in einem Speicher der elektronischen Recheneinrichtung.

Somit werden beispielsweise mittels der elektronischen Recheneinrichtung die geometrischen Daten empfangen beziehungsweise erfasst. Die geometrischen Daten charakterisieren beispielsweise eine Geometrie zumindest des zu bearbeitenden Teilbereichs des Werkstücks. Alternativ oder zusätzlich charakterisieren die geometrischen Daten beispielsweise eine Geometrie eines durch Bearbeiten des Werkstücks herzustellenden Bauteils. Somit charakterisieren die Daten die mittels des Antriebs zu bewirkende Relativbewegung zwischen dem Werkzeug und dem Werkstück.

Bei einem zweiten Schritt des Verfahrens werden mittels der elektronischen Recheneinrichtung, insbesondere mittels einer auch als Sendeeinheit bezeichneten Sendeeinrichtung der elektronischen Recheneinrichtung, Sendedaten bereitgestellt, welche die Bewegung beziehungsweise die geometrischen Daten charakterisieren. Beispielsweise werden mittels der elektronischen Recheneinrichtung, insbesondere mittels der Sendeeinrichtung, die Sendedaten an eine von der elektronischen Recheneinrichtung unterschiedliche, zusätzlich zu der elektronischen Recheneinrichtung vorgesehene und beispielsweise bezüglich der elektronischen Recheneinrichtung, insbesondere bezüglich der Werkzeugmaschine, externe Einheit übermittelt. Diese Einheit ist beispielsweise eine weitere elektronische Recheneinheit. Ferner ist es denkbar, dass die Einheit, an welche die Sendedaten übermittelt werden, ein Server sein und/oder sich in der beispielsweise eine NC-Steuerung oder CNC-Steuerung bildenden elektronischen Recheneinrichtung selbst befinden kann, sodass die Einheit beispielsweise keine bezüglich der elektronischen Recheneinrichtung externe, sondern eine interne Einheit ist.

Bei einem dritten Schritt des Verfahrens werden mittels der elektronischen Recheneinrichtung in Abhängigkeit von dem Bereitstellen der Sendedaten von einer von der elektronischen Recheneinrichtung unterschiedlichen, zusätzlich zu der elektronischen Recheneinrichtung vorgesehenen und beispielsweise bezüglich der elektronischen Recheneinrichtung, insbesondere bezüglich der Werkzeugmaschine, externen Einrichtung in Abhängigkeit von den bereitgestellten Sendedaten bereitgestellte Schnittwertdaten, insbesondere automatisch, empfangen. Insbesondere werden die Schnittwertdaten mittels einer auch als Empfangseinheit bezeichneten Empfangseinrichtung der elektronischen Recheneinrichtung empfangen. Bei der Einrichtung, die die Schnittwertdaten in Abhängigkeit von den bereitgestellten Sendedaten bereitstellt und beispielsweise an die elektronische Recheneinrichtung übermittelt, kann es sich um die zuvor genannte Einheit oder aber um eine von der Einheit unterschiedliche und zusätzlich zu der Einheit vorgesehene Einrichtung handeln, die auch eine von der elektronischen Recheneinrichtung unterschiedliche, zusätzlich dazu vorgesehene Einrichtung ist. Die Schnittwertdaten charakterisieren beziehungsweise umfassen dabei wenigstens einen Schnittwert.

Bei einem vierten Schritt des Verfahrens wird mittels der elektronischen Recheneinrichtung wenigstens ein Wert der Variablen in Abhängigkeit von den empfangenen Schnittwertdaten, insbesondere automatisch, eingestellt. Bei dem wenigstens einen Wert, welcher mittels der elektronischen Recheneinrichtung, insbesondere automatisch, eingestellt wird, handelt es sich beispielsweise um den durch die Schnittwertdaten charakterisierten Schnittwert.

Wie zuvor beschrieben, ist in Abhängigkeit von der Variablen, insbesondere in Abhängigkeit von dem eingestellten Wert der Variablen, der Antrieb der Werkzeugmaschine, insbesondere mittels der elektronischen Recheneinrichtung, betreibbar, um zum Bearbeiten zumindest des Teilbereichs des Werkstücks die Relativbewegung zwischen dem Werkzeug und dem Werkstück zu bewirken. Insbesondere kann beispielsweise der Antrieb das Werkzeug der Werkzeugmaschine in Abhängigkeit von dem eingestellten Wert der Variablen antreiben und dadurch relativ zu dem Werkstück bewegen und/oder der Antrieb kann das Werkstück in Abhängigkeit von dem eingestellten Wert relativ zu dem Werkzeug bewegen.

Da nun der Wert der Variablen mittels der elektronischen Recheneinrichtung, insbesondere automatisch, eingestellt wird, kann die Werkzeugmaschine nach dem, insbesondere automatischen, Einstellen des Werts der Variablen betrieben werden, um den Antrieb in Abhängigkeit von dem eingestellten Wert der Variablen zu betreiben und somit um die Relativbewegung zwischen dem Werkzeug und dem Werkstück zu bewirken. Der Wert der Variablen wird durch das erfindungsgemäße Verfahren auf besonders zeit- und somit kostengünstige Weise sowie vorzugsweise automatisch eingestellt, indem der Wert auf die beschriebene Weise und somit in Abhängigkeit von der von der Person bewirkten Eingabe eingestellt wird. Mit anderen Worten muss die Person lediglich die Eingabe bewirken, woraufhin die Variable beziehungsweise ihr Wert, insbesondere der Schnittwert, insbesondere automatisch und somit ohne weiteres Zutun der Person, eingestellt wird. Zum Einstellen des Werts der Variablen reicht es somit aus, dass die Person die Eingabe in die Werkzeugmaschine beziehungsweise in die elektronische Recheneinrichtung bewirkt. Die Person muss nicht weitere Eingaben in von der elektronischen Recheneinrichtung unterschiedliche Komponenten bewirken, um den Schnittwert zu ermitteln und die Person muss daraufhin auch nicht den Schnittwert selbst in die elektronische Recheneinrichtung eingeben.

Der Erfindung liegen dabei die folgenden Erkenntnisse zugrunde: Die Erstellung von Programmen, insbesondere von NC-Programmen, zum Betreiben von Werkzeugmaschinen kann durch die Verwendung von Bearbeitungszyklen stark vereinfacht und beschleunigt werden. Als Bearbeitungszyklus bezeichnet man eine in der NC-Steuerung beziehungsweise in der CNC-Steuerung gespeicherte häufig vorkommende Abfolge von Einzelbearbeitungsschritten, zum Beispiel zum Fertigen eines Bohrloches. Veränderliche Werte, das heißt Variable beziehungsweise veränderliche Werte von Variablen, werden dabei beispielsweise nicht im jeweiligen Bearbeitungszyklus definiert, sondern als Parameter an diesen vor dessen Ausführung übergeben. Zur Erstellung eines Programms zum Steuern einer Werkzeugmaschine wird beispielsweise auf einer elektronischen Anzeige beziehungsweise einem elektronischen Bildschirm eine Eingabemaske bereitgestellt beziehungsweise angezeigt. Über diese Eingabemaske kann die zuvor genannte Person beispielsweise die Eingabe bewirken und somit beispielsweise die geometrischen Daten in die elektronische Recheneinrichtung eingeben. Beispielsweise muss die auch als Bediener bezeichnete Person zusätzlich zu den geometrischen Daten, welche auch als geometrische Maße bezeichnet werden, auch eingeben, mithilfe welches Werkzeugs die Bearbeitung ausgeführt werden soll. Üblicherweise muss die Person auch Schnittwerte über die Maske eingeben, welche verwendet werden solle. Der jeweilige Schnittwert ist beispielsweise ein Vorschub und/oder eine Drehzahl, insbesondere eine Spindeldrehzahl. Mit anderen Worten charakterisiert beispielsweise der Schnittwert einen Wert eines Vorschubs, mit welchem das Werkzeug relativ zu dem Werkstück mittels des Antriebs translatorisch bewegt wird. Alternativ oder zusätzlich bezeichnet oder definiert der Schnittwert beispielsweise einen Wert einer Drehzahl, insbesondere einer Spindeldrehzahl, mit welcher das Werkzeug mittels des Antriebs relativ zu dem Werkstück gedreht wird. Die richtige Festlegung der Schnittwerte ist üblicherweise schwierig, da sie von einer Vielzahl von Einflussfaktoren abhängig sind.

Üblicherweise werden die zu verwendenden Schnittwerte von dem Hersteller des Werkzeugs, welches zum Bearbeiten des Werkstücks verwendet wird, auf allgemeiner Basis empfohlen. Oftmals werden die zu verwendenden Schnittwerte einem Druckexemplar, beispielsweise einem gedruckten Katalog, entnommen. Üblicherweise werden jedoch keine diskreten Werte, sondern lediglich Wertebereiche, das heißt sogenannte Von-Bis-Werte, angegeben, sodass die Person aus dem angegebenen Bereich einen Schnittwert auswählen muss. Die Schnittwerte beziehungsweise die Bereiche werden somit in einer recht weiten Streuung angegeben, sodass keine einfache Übernahme eines solchen Schnittwertvorschlags möglich ist.

Darüber hinaus ist die Verwendung von speziellen Computerprogrammen denkbar, welche beispielsweise von den Werkzeugherstellern bereitgestellt werden. Nachdem die Person in ein solches Computerprogramm die geometrischen Daten eingegeben hat, stellt das jeweilige Computerprogramm konkrete Empfehlungen für die Schnittwerte und dabei insbesondere für Vorschub und Drehzahl bereit. Dies bedeutet jedoch, dass die Person alle Parameter beziehungsweise zumindest die geometrischen Daten zweimal eingeben muss: Einmal muss die Person die geometrischen Daten in die elektronische Recheneinrichtung der Werkzeugmaschine und einmal noch umfangreicher in eine externe Software und somit in das zuvor genannte, von dem Werkzeughersteller bereitgestellte Computerprogramm eingeben. Schlägt das Computerprogramm dann den jeweiligen Schnittwert vor, so muss die Person dann den vorgeschlagenen Schnittwert noch in die elektronische Recheneinrichtung der Werkzeugmaschine eingeben. Dies führt zu einer sehr zeit- und kostenaufwendigen Bearbeitung.

Die zuvor genannten Probleme und Nachteile können nun durch das erfindungsgemäße Verfahren vermieden werden. Nachdem beispielsweise die Person beziehungsweise der Bediener einen Bearbeitungszyklus und ein Werkzeug zum Bearbeiten des Werkstücks ausgewählt beziehungsweise ermittelt und die Eingabe bewirkt, das heißt die geometrischen Daten in die elektronische Recheneinrichtung eingegeben hat, werden die Sendedaten, die die Bewegung beziehungsweise die geometrischen Daten charakterisieren, an die zuvor genannte Einheit übermittelt. Bei der zuvor genannten Einheit handelt es sich beispielsweise um ein bezüglich der elektronischen Recheneinrichtung beziehungsweise der Werkzeugmaschine externes Software-System, insbesondere des Herstellers des Werkzeugs. Beispielsweise werden die Sendedaten in Abhängigkeit von einem empfangenen beziehungsweise ermittelten Bedienschritt der Person bereitgestellt, das heißt an die Einheit übermittelt. Daraufhin werden die Schnittwertdaten automatisch empfangen, woraufhin der Wert, insbesondere der Schnittwert, der Variablen in Abhängigkeit von den empfangenen Schnittwertdaten, insbesondere automatisch, eingestellt wird. Somit ist es vorzugsweise vorgesehen, dass nach der Eingabe und vorzugsweise nach dem zuvor genannten Bedienschritt und vor dem, insbesondere automatischen, Einstellen des Werts der Variablen eine durch die Person bewirkte Eingabe in die elektronische Recheneinrichtung beziehungsweise ein durch die elektronische Recheneinrichtung durchgeführter und von einer durch die Person bewirkten Eingabe abhängiger Schritt der elektronischen Recheneinrichtung unterbleibt. Dadurch kann nach der Eingabe durch die Person, insbesondere nach dem Bedienschritt, der Wert, insbesondere der Schnittwert, der Variablen, insbesondere automatisch, eingestellt werden, sodass das Werkstück besonders zeit- und kostengünstig bearbeitet werden kann.

Als besonders vorteilhaft hat es sich gezeigt, wenn, insbesondere nach dem Einstellen des Werts der Variablen, die Werkzeugmaschine, insbesondere mittels der elektronischen Recheneinrichtung, in Abhängigkeit von dem eingestellten Wert und somit in Abhängigkeit von den empfangenen Schnittwertdaten sowie vorzugsweise in Abhängigkeit von der durch die Eingabe charakterisierten Bewegung betrieben wird, indem in Abhängigkeit von dem eingestellten Wert beziehungsweise in Abhängigkeit von den empfangenen Schnittwertdaten und in Abhängigkeit von der Bewegung beziehungsweise von der Eingabe die Relativbewegung zwischen dem Werkstück und dem Werkzeug mittels des Antriebs bewirkt wird, wodurch zumindest der Teilbereich des Werkstücks mittels des Werkzeugs bearbeitet wird. Hierzu wird beispielsweise das Werkzeug mittels des Antriebs angetrieben und dadurch relativ zu dem Werkstück bewegt. Bei dieser Bearbeitung kann es sich beispielsweise um eine mechanische, insbesondere eine spanende, Bearbeitung und/oder um eine davon unterschiedliche Bearbeitung handeln.

Unter dem Bereitstellen der Sendedaten ist beispielsweise zu verstehen, dass die Sendedaten an die zuvor genannte, von der elektronischen Recheneinrichtung unterschiedliche und beispielsweise bezüglich der elektronischen Recheneinrichtung beziehungsweise bezüglich der Werkzeugmaschine unterschiedliche Einheit übermittelt werden, wobei die Einheit vorzugsweise eine elektronische Recheneinheit ist. Die Einheit kann dabei die von der elektronischen Recheneinrichtung unterschiedliche Einrichtung oder eine weitere, von der elektronischen Recheneinrichtung und von der Einrichtung unterschiedliche, zusätzlich dazu vorgesehene Einheit sein.

Um die Werkzeugmaschine besonders zeit- und kostengünstig betreiben zu können, ist es in vorteilhafter Ausgestaltung der Erfindung vorgesehen, dass die Sendedaten auch wenigstens eine Antriebsleistung, insbesondere eine mechanische und/oder elektrische Antriebsleistung, des Antriebs charakterisieren beziehungsweise umfassen. Dadurch kann der Wert der Variablen besonders präzise und automatisch eingestellt werden. Mit anderen Worten wird auch die Antriebsleistung des Antriebs, insbesondere wenigstens einer Achse und/oder wenigstens einer Spindel des Antriebs, automatisch an die Einrichtung übermittelt. Hierzu wird die Antriebsleistung beispielsweise aus einer Steuerung der elektronischen Recheneinrichtung beziehungsweise der Werkzeugmaschine, insbesondere automatisch, ausgelesen und, insbesondere automatisch, an die Einrichtung übermittelt, ohne dass hierzu die Person aktiv werden muss. Dadurch kann das Werkstück besonders zeit- und kostengünstig bearbeitet werden.

Eine weitere Ausführungsform zeichnet sich dadurch aus, dass die Sendedaten auch tatsächliche Ist-Maße des Werkzeugs charakterisieren beziehungsweise umfassen. Bei diesen Ist-Maßen handelt es sich um eine erste Zustandsinformation über das Werkzeug, welche nun bei der Ermittlung und somit Einstellung des Werts der Variablen berücksichtigt werden kann. Dadurch kann das Werkstück auf besonders zeit- und kostengünstige Weise sowie besonders präzise bearbeitet werden.

Das erfindungsgemäße Verfahren ermöglicht es insbesondere, mehrere Quellen zur Ermittlung des Werts, insbesondere des Ist-Werts, der Variablen einzubinden beziehungsweise zu berücksichtigen. Dies bedeutet beispielsweise, dass bei Verwendung von unterschiedlichen Werkzeugen unterschiedliche Quellen beziehungsweise Einrichtungen herangezogen werden können, um die Variable beziehungsweise ihren Wert einzustellen. Wird somit beispielsweise ein erstes Werkzeug von einem ersten Werkzeughersteller verwendet, so werden die Schnittwertdaten beispielsweise von einer ersten Einrichtung des ersten Werkzeugherstellers bezogen. Wird demgegenüber jedoch zum Bearbeiten des Werkstücks ein zweites Werkzeug eines zweiten Werkzeugherstellers verwendet, so werden beispielsweise die Schnittwertdaten von einer zweiten Einrichtung des zweiten Werkzeugherstellers bezogen. Dadurch kann sichergestellt werden, dass die Werkzeugmaschine unter Berücksichtigung des verwendeten Werkzeugs besonders vorteilhaft eingestellt und in der Folge betrieben wird. Dadurch kann das Werkstück präzise sowie zeit- und kostengünstig bearbeitet werden. Dieser Ausführungsform liegt die Erkenntnis zugrunde, dass der jeweilige Werkzeughersteller das von ihm hergestellte Werkstück beziehungsweise dessen Eigenschaften am besten kennt, sodass die Werkzeugmaschine vorteilhaft eingestellt werden kann.

Eine weitere Ausführungsform zeichnet sich dadurch aus, dass die Sendedaten auch einen Zustand, insbesondere einen Verschleißzustand, des Werkzeugs charakterisieren beziehungsweise umfassen. Der Zustand beziehungsweise der Verschleißzustand ist beispielsweise eine zweite Zustandsinformation des Werkzeugs, wobei anhand der jeweiligen Zustandsinformation der Wert, insbesondere der Schnittwert, besonders präzise ermittelt und in der Folge eingestellt werden kann.

In weiterer Ausgestaltung der Erfindung ist es vorgesehen, dass die Sendedaten auch eine Montage des Werkzeugs an einem Werkzeughalter charakterisieren beziehungsweise umfassen, über welchen das Werkzeug mit dem Antrieb gekoppelt ist. Die Montage wird auch als Aufbau bezeichnet, wobei der Werkzeughalter auch als Adapter bezeichnet wird. Dieser Ausführungsform liegt die Erkenntnis zugrunde, dass die Montage des Werkzeugs an beziehungsweise in dem Werkzeughalter Auswirkung auf die Steifigkeit und damit auf die Leistungsfähigkeit des Werkzeugs hat. Die dieser Ausführungsform zugrundeliegende Idee ist, der beispielsweise externen Einrichtung möglichst umfangreiche beziehungsweise umfassende Daten in Form der Sendedaten bereitzustellen, sodass die Einrichtung den beispielsweise als Schnittwert ausgebildeten Wert vorteilhaft und insbesondere präzise ermitteln und in der Folge an die elektronische Recheneinrichtung rückmelden kann. Dabei ist es denkbar, dass die tatsächlichen Ist-Maße des Werkzeugs, der Verschleißzustand des Werkzeugs sowie die Montage des Werkzeugs an dem Werkzeughalter der zuvor genannten Steuerung bekannt sind und somit beispielsweise automatisch beziehungsweise einfach an die Einrichtung und insbesondere deren Berechnungsalgorithmus zum Ermitteln des Werts der Variablen übermittelt beziehungsweise übertragen werden können.

Bei einer besonders vorteilhaften Ausführungsform der Erfindung charakterisieren die Sendedaten auch ein Schmier- und/oder Kühlmittel, welches während des Bearbeitens zu verwenden ist, um das Werkzeug zu kühlen und/oder zu schmieren. Hierzu kann der Wert der Variablen auch unter Berücksichtigung des zum Einsatz kommenden Schmier- beziehungsweise Kühlmittels erfolgen, sodass die Werkzeugmaschine auf einfache und präzise Weise eingestellt werden kann.

In weiterer vorteilhafter Ausgestaltung der Erfindung charakterisieren die Sendedaten auch ein Rohmaterial, aus welchem zumindest der zu bearbeitende Teilbereich des Werkstücks gebildet beziehungsweise hergestellt ist. Dadurch kann die externe Einrichtung den Wert der Variablen auch unter Berücksichtigung des Rohmaterials ermitteln, sodass die Werkzeugmaschine auf einfache Weise präzise eingestellt werden kann.

Mit anderen Worten ist es vorzugsweise vorgesehen, dass die elektronische Recheneinrichtung der externen Einrichtung beziehungsweise deren Berechnungsalgorithmus oder Berechnungsprogramm zum Ermitteln des Werts der Variablen weitere bekannte und prozessbestimmende Parameter mitteilt. Bei diesen weiteren, bekannten und prozessbestimmenden Parametern kann es sich um die Art des Kühl- beziehungsweise Schmiermittels und/oder um die Art des Rohmaterials handeln.

Die Art eines Zugangs zu der externen Einrichtung kann eine Installation direkt auf beziehungsweise in der Steuerung beziehungsweise der elektronischen Recheneinrichtung und dabei beispielsweise auf einer Bedieneinheit der elektronischen Recheneinrichtung und/oder als eine Server-Lösung in einem Netzwerk eines Maschinenbetreibers ("In-Line") oder einen Zugang über das Internet und dabei über eine Datenwolke umfassen. Mit anderen Worten hat es sich als vorteilhaft gezeigt, wenn die elektronische Recheneinrichtung die Sendedaten über wenigstens eine physische Leitung und/oder leitungslos und dabei vorzugsweise per Funk bereitstellt beziehungsweise an die Einrichtung übermittelt.

Bei einer weiteren besonders vorteilhaften Ausführungsform der Erfindung charakterisieren beziehungsweise definieren die Schnittwertdaten wenigstens eine rotatorische Geschwindigkeit und somit beispielsweise eine Drehzahl und/oder wenigstens eine translatorische Geschwindigkeit und somit einen Vorschub, mit welcher die Relativbewegung zu bewirken ist beziehungsweise bewirkt wird. Beispielsweise ist oder wird das Werkzeug mit dem Vorschub relativ zu dem Werkstück, insbesondere translatorisch, bewegt und/oder das Werkzeug wird beispielsweise mit der Drehzahl relativ zu dem Werkstück gedreht. Mit anderen Worten kann es sich bei dem Wert, insbesondere bei dem Schnittwert, der Variablen um einen Geschwindigkeitswert einer translatorischen Geschwindigkeit handeln, mit welcher beispielsweise das Werkzeug mittels des Antriebs relativ zu dem Werkstück zu bewegen ist. Die translatorische Geschwindigkeit wird auch als Vorschub bezeichnet. Alternativ oder zusätzlich kann es sich bei dem Wert, insbesondere bei dem Schnittwert, der Variablen um einen Drehzahlwert einer auch als Drehzahl bezeichneten rotatorischen Geschwindigkeit handeln, mit welcher eine Relativdrehung zwischen dem Werkstück und dem Werkzeug erfolgt. Beispielsweise ist die Drehzahl eine rotatorische Geschwindigkeit, mit welcher das beispielsweise Werkzeug mittels des Antriebs relativ zu dem Werkstück zu drehen ist beziehungsweise gedreht wird, insbesondere während eine Drehung des Werkstücks unterbleibt. Ferner ist es denkbar, dass die Drehzahl eine rotatorische Geschwindigkeit, mit welcher das Werkstück, insbesondere mittels des Antriebs, relativ zu dem Werkzeug gedreht wird, insbesondere während eine Drehung des Werkzeugs unterbleibt. Dies ist beispielsweise bei einem Drehprozess vorgesehen. Hier wird das Werkzeug beispielsweise nur translatorisch im Raum relativ zu dem Werkstück bewegt, insbesondere während das Werkstück gedreht wird. Somit ist es vorzugsweise vorgesehen, dass die Drehzahl und/oder der Vorschub des Werkzeugs, insbesondere automatisch, mittels der elektronischen Recheneinrichtung in Abhängigkeit von den empfangenen Schnittwertdaten eingestellt werden.

Die der Erfindung zugrundeliegende Idee liegt in der direkten Verknüpfung der beispielsweise als NC-Steuerung oder CNC-Steuerung zum Steuern oder Regeln der Werkzeugmaschine ausgebildeten elektronischen Recheneinrichtung mit der beispielsweise bezüglich der elektronischen Recheneinrichtung externen Einrichtung, welche beispielsweise eine Schnittstelle aufweist, über welche die externe Einrichtung die Sendedaten empfangen und/oder die Schnittwertdaten bereitstellen kann. Im Vergleich zu herkömmlichen Vorgehen muss die Person nicht mehr eine große Anzahl von Parametern beziehungsweise Variablen oder Werten doppelt eingeben und bekommt Vorschlagswerte direkt in dafür vorgesehene Eingabefelder angezeigt. Weiterhin entfällt ein Auslesen von Antriebsdaten der Werkzeugmaschine. Somit können Akzeptanz und Effektivität des Bedieners deutlich erhöht und die Fehlerabhängigkeit durch Doppeleingabe und Abtippen von Ergebnissen verringert werden.

In weiterer Ausgestaltung der Erfindung kann vorgesehen sein, dass die Schnittwertdaten Werkzeugdaten umfassen, welche ein von dem von der Person ausgewählten Werkzeug unterschiedliches weiteres Werkzeug charakterisieren. Mit anderen Worten kann das erfindungsgemäße Verfahren derart weiter gestaltet werden, dass die externe Einrichtung nicht oder nicht nur das von der Person ausgewählte Werkzeug, sondern alle an der elektronischen Recheneinrichtung beziehungsweise in oder an der Werkzeugmaschine vorhandenen oder vorgesehenen beziehungsweise von der Werkzeugmaschine beziehungsweise von der elektronischen Recheneinrichtung zugänglichen Werkzeuge in die Ermittlung der Schnittwertdaten mit einbezieht und dann das Werkzeug auswählt, mit welchem die programmierte Bearbeitung am effizientesten beziehungsweise kostengünstigsten ausgeführt werden kann.

Eine weitere Ausführungsform kann vorsehen, dass durch die Schnittwertdaten beziehungsweise durch die externe Einrichtung und somit durch den Werkzeughersteller ein von dem von der Person ausgewählten Werkzeug unterschiedliches Werkzeug vorgeschlagen wird, welches die Person noch nicht besitzt, jedoch bei dem Werkzeughersteller kaufen kann. Ein Anschluss des Kaufs kann Bestandteil des Prozesses sein.

Ein weiterer Aspekt kann eine Rückübertragung von Vorschlagswerten, die von der Person gegebenenfalls modifiziert sind beziehungsweise wurden, an die externe Einrichtung sein, wodurch beispielsweise ein Prozess zur Verbesserung der vorgenannten Schnittwertdaten initiiert werden kann.

Ein zweiter Aspekt der Erfindung betrifft eine Werkzeugmaschine, welche insbesondere zum Durchführen des erfindungsgemäßen Verfahrens gemäß dem ersten Aspekt der Erfindung ausgebildet ist. Die Werkzeugmaschine umfasst wenigstens einen Antrieb, mittels welchem zumindest ein Werkzeug antreibbar und dadurch relativ zu einem Werkstück bewegbar ist, um dadurch das Werkstück zu bearbeiten. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Computerprogramm beziehungsweise ein Computerprogrammprodukt, welches Befehle umfasst, die bewirken, dass die Werkzeugmaschine gemäß dem zweiten Aspekt der Erfindung das Verfahren gemäß dem ersten Aspekt der Erfindung ausführt, insbesondere wenn das Computerprogramm beziehungsweise das Computerprogrammprodukt durch einen Computer, insbesondere durch die elektronische Recheneinrichtung der Werkzeugmaschine, ausgeführt wird. Das einfach auch als Programm bezeichnete Computerprogramm ist, insbesondere direkt, in einen Speicher des Computers beziehungsweise der elektronischen Recheneinrichtung ladbar. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Ein vierter Aspekt der Erfindung umfasst ein computerlesbares Medium, Speichermedium beziehungsweise einen computerlesbaren Datenträger, wobei auf dem computerlesbaren Medium gemäß dem vierten Aspekt der Erfindung das Computerprogramm gemäß dem dritten Aspekt der Erfindung gespeichert ist. Vorzugsweise umfasst das computerlesbare Medium gemäß dem vierten Aspekt der Erfindung Befehle, die bei der Ausführung durch einen Computer, insbesondere durch die elektronische Recheneinrichtung der Werkzeugmaschine, diesen beziehungsweise diese veranlassen, das Verfahren gemäß dem ersten Aspekt der Erfindung auszuführen. Vorteile und vorteilhafte Ausgestaltungen des ersten Aspekts, des zweiten Aspekts und des dritten Aspekts der Erfindung sind als Vorteile und vorteilhafte Ausgestaltungen des vierten Aspekts der Erfindung anzusehen und umgekehrt.

Ein fünfter Aspekt der Erfindung betrifft ein Verfahren zum Bereitstellen von Schnittwertdaten zum Betreiben einer Werkzeugmaschine. Bei einem ersten Schritt des Verfahrens werden mittels einer elektronischen Recheneinrichtung Sendedaten empfangen, welche von einer von der elektronischen Recheneinrichtung unterschiedlichen und zum Betreiben der Werkzeugmaschine ausgebildeten elektronischen Recheneinrichtung bereitgestellt sind und eine mittels eines Antriebs der Werkzeugmaschine zu bewirkende und zum Bearbeiten zumindest eines Teilbereichs eines Werkstücks vorgesehene Bewegung eines Werkzeugs, insbesondere der Werkzeugmaschine, charakterisieren. Bei einem zweiten Schritt des Verfahrens gemäß dem fünften Aspekt der Erfindung wird mittels der elektronischen Recheneinrichtung in Abhängigkeit von den empfangenen Sendedaten wenigstens ein Schnittwert zum Bearbeiten zumindest des Teilbereichs, insbesondere automatisch, ermittelt. Bei dem dritten Schritt des Verfahrens werden mittels der elektronischen Recheneinheit Schnittwertdaten, insbesondere automatisch, bereitgestellt, welche den ermittelten Schnittwert charakterisieren. Unter dem Bereitstellen der Schnittwertdaten ist insbesondere zu verstehen, dass die Schnittwertdaten mittels der elektronischen Recheneinheit an die elektronische Recheneinrichtung übermittelt werden. Vorteile und vorteilhafte Ausgestaltungen des ersten Aspekts, des zweiten Aspekts, des dritten Aspekts und des vierten der Erfindung sind als Vorteile und vorteilhafte Ausgestaltungen des fünften Aspekts der Erfindung anzusehen und umgekehrt.

Ein sechster Aspekt der Erfindung betrifft ein Computerprogramm beziehungsweise ein Computerprogrammprodukt, welches Befehle umfasst, die bei der Ausführung des Computerprogramms durch einen Computer beziehungsweise durch die elektronische Recheneinheit diesen beziehungsweise diese veranlassen, das Verfahren gemäß dem fünften Aspekt der Erfindung durchzuführen. Vorteile und vorteilhafte Ausgestaltungen des ersten Aspekts, des zweiten Aspekts, des dritten Aspekts, des vierten Aspekts und des fünften Aspekts der Erfindung sind als Vorteile und vorteilhafte Ausgestaltungen des sechsten Aspekts der Erfindung anzusehen und umgekehrt.

Schließlich betrifft ein siebter Aspekt der Erfindung ein computerlesbares Medium, Speichermedium oder einen computerlesbaren Datenträger, auf dem das Computerprogramm beziehungsweise das Computerprogrammprodukt gemäß dem sechsten Aspekt der Erfindung gespeichert ist. Das computerlesbare Medium gemäß dem siebten Aspekt der Erfindung umfasst vorzugsweise Befehle, die bei der Ausführung des computerlesbaren Mediums beziehungsweise des Computerprogramms durch einen Computer diesen veranlassen, das Verfahren gemäß dem fünften Aspekt auszuführen. Vorteile und vorteilhafte Ausgestaltungen des ersten Aspekts, des zweiten Aspekts, des dritten Aspekts, des vierten Aspekts, des fünften Aspekts und des sechsten Aspekts der Erfindung sind als Vorteile und vorteilhafte Ausgestaltungen des siebten Aspekts der Erfindung anzusehen und umgekehrt.

Vorzugsweise gehört zu der Erfindung auch ein Verfahren zum Betreiben einer Werkzeugmaschine, welche wenigstens einen Antrieb aufweist, mittels welchem in Abhängigkeit von wenigstens einer Variablen zumindest ein Werkzeug antreibbar und dadurch relativ zu einem Werkstück bewegbar ist, um dadurch das Werkstück, insbesondere zumindest in einem Teilbereich des Werkstücks, zu bearbeiten. Dies ist beispielsweise ein achter Aspekt der Erfindung. Der achte Aspekt der Erfindung umfasst einen ersten Schritt, bei welchem mittels einer elektronischen Recheneinrichtung, insbesondere einer Werkzeugmaschine, wenigstens eine durch eine Person bewirkte Eingabe empfangen wird, welche wenigstens eine mittels des Antriebs zu bewirkende und zum Bearbeiten zumindest des Teilbereichs des Werkstücks vorgesehene Bewegung des Werkzeugs charakterisiert. Bei dem zweiten Schritt des Verfahrens gemäß dem achten Aspekt der Erfindung werden mittels der elektronischen Recheneinrichtung Sendedaten bereitgestellt, welche die Bewegung charakterisieren. Mittels einer von der elektronischen Recheneinrichtung unterschiedlichen, zusätzlich dazu vorgesehenen elektronischen Recheneinheit werden die bereitgestellten Sendedaten empfangen. Mittels der elektronischen Recheneinheit wird in Abhängigkeit von den empfangenen Sendedaten wenigstens ein Schnittwert zum Bearbeiten zumindest des Teilbereichs ermittelt. Mittels der elektronischen Recheneinheit werden Schnittwertdaten bereitgestellt, welche den ermittelten Schnittwert charakterisieren. Mittels der elektronischen Recheneinrichtung werden in Abhängigkeit von dem Bereitstellen der Sendedaten die bereitgestellten Schnittwertdaten empfangen. Außerdem wird mittels der elektronischen Recheneinrichtung wenigstens ein Wert der Variablen in Abhängigkeit von den empfangenen Schnittwertdaten eingestellt, wobei vorzugsweise der Wert dem durch die Schnittwertdaten charakterisierten Schnittwert entspricht.

Ein achter Aspekt der Erfindung betrifft ein System, welches wenigstens eine Werkzeugmaschine umfasst, die wenigstens einen Antrieb aufweist, mittels welchem zumindest ein Werkzeug antreibbar und dadurch relativ zu dem Werkstück bewegbar ist, um dadurch das Werkstück zu bearbeiten.

Schließlich betrifft ein neunter Aspekt der Erfindung ein Computerprogramm oder Computerprogrammprodukt, umfassend Befehle, die bewirken, dass das System gemäß dem neunten Aspekt der Erfindung das Verfahren gemäß dem achten Aspekt der Erfindung ausführt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Darstellung einer erfindungsgemäßen Werkzeugmaschine, welche zum Durchführen eines erfindungsgemäßen Verfahrens ausgebildet ist;
- FIG 2: ein Flussdiagramm zum Veranschaulichen eines erfindungsgemäßen Verfahrens zum Betreiben der Werkzeugmaschine; und
- FIG 3: ein Flussdiagramm zum Veranschaulichen eines erfindungsgemäßen Verfahrens zum Bereitstellen von Schnittwerten zum Betreiben der Werkzeugmaschine.

In den Figuren sind gleiche oder funktionsgleiche Elemente mit gleichen Bezugszeichen versehen.

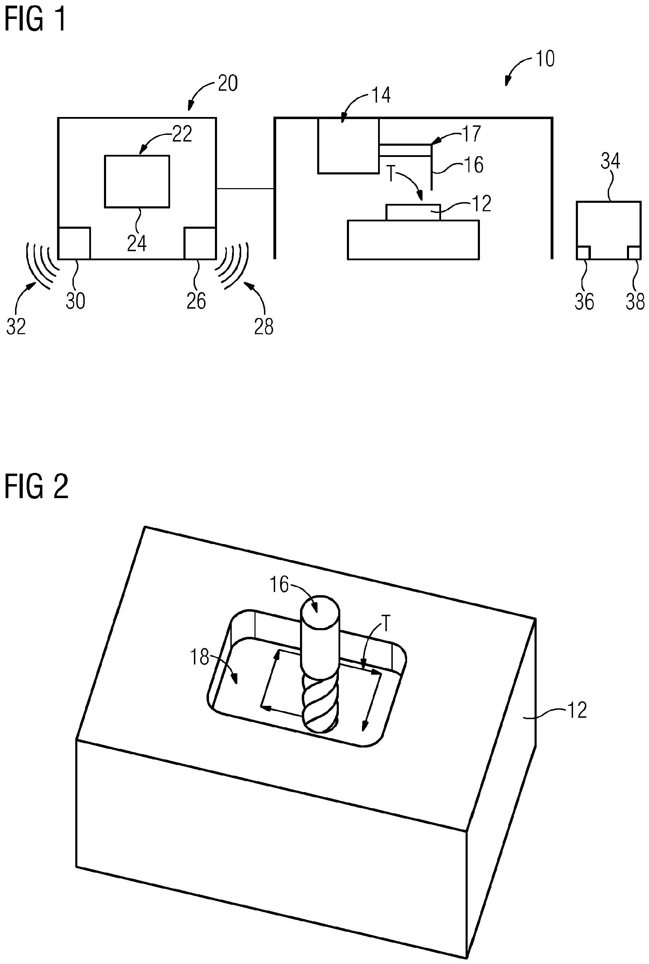

FIG 1 zeigt in einer schematischen Darstellung eine Werkzeugmaschine 10, mittels welcher Werkstücke, insbesondere mechanisch, bearbeitet werden können. Ein solches, mittels der Werkzeugmaschine 10 zu bearbeitendes Werkstück ist in FIG 1 besonders schematisch dargestellt und mit 12 bezeichnet. Die Werkzeugmaschine 10 weist wenigstens einen Antrieb 14 auf, mittels welchem wenigstens eine oder mehrere Relativbewegungen zwischen wenigstens einem Werkzeug 16 und dem Werkstück 12 bewirkbar ist, um dadurch das Werkstück 12 mittels des Werkzeugs 16 zu bearbeiten. Insbesondere kann der Antrieb 14 das Werkzeug 16 antreiben und dadurch relativ zu dem Werkstück 12 bewegen, um dadurch das Werkstück 12 zumindest in einem Teilbereich T des Werkstücks 12 zu bearbeiten. Unter dem Merkmal, dass das Werkzeug 16 mittels des Antriebs 14 relativ zu dem Werkstück 12 bewegbar ist, um dadurch das Werkstück 12 zumindest im Teilbereich T zu bearbeiten, ist insbesondere zu verstehen, dass der Antrieb 14 dazu ausgebildet ist, Relativbewegungen zwischen dem Werkstück 12 und dem Werkzeug 16 zu bewirken, um durch diese Relativbewegungen zwischen dem Werkstück 12 und dem Werkzeug 16 das Werkstück 12 mittels des Werkzeugs 16 zumindest in dem Teilbereich T des Werkstücks 12 zu bearbeiten.

Außerdem ist aus FIG 1 erkennbar, dass vorliegend das Werkzeug 16 an einen Werkzeughalter 17 montiert und über den Werkzeughalter 17 mit dem Antrieb 14 gekoppelt ist, sodass das Werkzeug 16 unter Vermittlung des Werkzeughalters 17 von dem Antrieb 14 antreibbar ist beziehungsweise angetrieben wird.

Alternativ oder zusätzlich ist es denkbar, dass der Antrieb 14 dazu ausgebildet ist, das Werkzeug 16 relativ zu dem Werkstück 12 zu bewegen, während das Werkstück 12 ortsfest verbleibt, um dadurch das Werkstück 12 zu bearbeiten. Ferner ist es denkbar, dass der Antrieb 14 dazu ausgebildet ist, das Werkstück 12 relativ zu dem Werkzeug 16 zu bewegen, während das Werkzeug 16 ortsfest verbleibt, um dadurch das Werkstück 12 zu bearbeiten. Außerdem ist es möglich, dass der Antrieb 14 dazu ausgebildet ist, sowohl das Werkstück 12 als auch das Werkzeug 16, insbesondere im Raum, zu bewegen und dabei insbesondere relativ zueinander zu bewegen, um dadurch das Werkstück 12 zu bearbeiten.

Wie in FIG 1 schematisch dargestellt ist, ist es beispielsweise vorgesehen, dass mittels des Werkzeugs 16 in dem Teilbereich T eine Tasche 18 des Werkstücks 12 hergestellt wird. Vorliegend handelt es sich bei dem Werkzeug 16 beispielsweise um einen Fräser beziehungsweise um einen Fräskopf, mittels welchem das Werkstück 12 mechanisch, insbesondere spanend, bearbeitet werden kann beziehungsweise bearbeitet wird. Um beispielsweise die Tasche 18 herzustellen, wird das Werkzeug 16 relativ zu dem Werkstück 12 mittels des Antriebs 14 translatorisch bewegt, wobei diese translatorische Bewegung entlang wenigstens einer Achse erfolgt und auch als Vorschub bezeichnet wird. Außerdem wird beispielsweise das Werkzeug 16 mittels des Antriebs 14 relativ zu dem Werkstück 12 rotatorisch bewegt, das heißt gedreht, wobei das Werkzeug 16 mittels des Antriebs 14 derart relativ zu dem Werkstück 12 gedreht wird, dass das Werkzeug 16 eine Drehzahl aufweist. Mit anderen Worten wird das Werkzeug 16 mittels des Antriebs 14 relativ zu dem Werkstück 12 mit einer auch als Vorschub bezeichneten Geschwindigkeit translatorisch bewegt. Des Weiteren wird das Werkzeug 16 mittels des Antriebs 14 relativ zu dem Werkstück 12 mit einer auch als Drehzahl bezeichneten Geschwindigkeit gedreht. Um die Werkzeugmaschine 10 zu betreiben und hierdurch das Werkstück 12 zu bearbeiten, ist eine elektronische Recheneinrichtung 20 vorgesehen. Die elektronische Recheneinrichtung 20 kann Bestandteil der Werkzeugmaschine 10 sein beziehungsweise die elektronische Recheneinrichtung 20 ist der Werkzeugmaschine 10 zugeordnet und beispielsweise derart mit der Werkzeugmaschine 10 gekoppelt oder verbunden, dass die elektronische Recheneinrichtung 20 die Werkzeugmaschine 10 ansteuern und dadurch betreiben, insbesondere steuern oder regeln, kann. Durch Ansteuern der Werkzeugmaschine 10 wird beispielsweise mittels der elektronischen Recheneinrichtung 20 der Antrieb 14 angesteuert, um hierdurch über den Antrieb 14 Relativbewegungen zwischen dem Werkstück 12 und dem Werkzeug 16 zu erzeugen beziehungsweise zu bewirken.

Die elektronische Recheneinrichtung 20 weist eine Eingabeeinrichtung 22 auf, welche beispielsweise eine elektronische Anzeige 24 umfasst. Im Folgenden wird ein Verfahren zum Betreiben der Werkzeugmaschine 10 beschrieben. Im Rahmen des Verfahrens wird beispielsweise auf der Anzeige 24 eine auch als Schnittstelle, Benutzerschnittstelle oder Mensch-Maschine-Schnittstelle bezeichnete Maske angezeigt, welche beispielsweise eine grafische Bedieneroberfläche oder grafische Benutzeroberfläche ist. Über die Maske und somit über die Eingabeeinrichtung 22 kann eine auch als Bediener bezeichnete Person, welche die Werkzeugmaschine 10 über die elektronische Recheneinrichtung 20 bedient, Eingaben in die elektronische Recheneinrichtung 20 durchführen und somit bewirken.

FIG 2 zeigt ein Flussdiagramm, anhand dessen das Verfahren zum Betreiben der Werkzeugmaschine 10 erläutert ist. Bei dem ersten Schritt S1 des Verfahrens empfängt die elektronische Recheneinrichtung 20, insbesondere mittels der Eingabeeinrichtung 22, wenigstens eine durch die Person bewirkte Eingabe, welche wenigstens eine mittels des Antriebs zu bewirkende und zum Bearbeiten zumindest des Teilbereichs T des Werkstücks 12 vorgesehene Bewegung des Werkzeugs 16 charakterisiert. Beispielsweise wird die Eingabe durch sogenannte geometrische Daten charakterisiert, sodass beispielsweise die elektronische Recheneinrichtung 20 die geometrischen Daten empfängt, welche von der Person eingegeben werden. Die geometrischen Daten charakterisieren die Eingabe und die Bewegung, die von dem Werkzeug 16 auszuführen und mittels des Antriebs 14 zu bewirken ist, um beispielsweise die Tasche 18 herzustellen. Beispielsweise definieren oder charakterisieren die geometrischen Daten eine Länge und/oder eine Breite und/oder eine Tiefe der herzustellenden Tasche 18. Somit charakterisieren die geometrischen Daten beispielsweise einen entlang einer ersten Richtung von dem Werkzeug 16 relativ zu dem Werkstück 12 zurückzulegenden ersten Weg, einen entlang einer zweiten Richtung von dem Werkzeug 16 relativ zu dem Werkstück 12 zurückzulegenden zweiten Weg und einen entlang einer dritten Richtung von dem Werkzeug 16 relativ zu dem Werkstück 12 zurückzulegenden dritten Weg, wobei die zweite Richtung senkrecht zur ersten Richtung und die dritte Richtung senkrecht zur ersten Richtung und senkrecht zur zweiten Richtung verläuft. Der erste Weg korrespondiert beispielsweise mit der Länge der Tasche 18, wobei der zweite Weg beispielsweise mit der Breite der Tasche 18 korrespondiert. Der dritte Weg korrespondiert beispielsweise mit der Tiefe der Tasche 18.

Bei dem zweiten Schritt S2 des Verfahrens werden mittels der elektronischen Recheneinrichtung 20, insbesondere mittels einer in FIG 1 besonders schematisch dargestellten Sendeeinrichtung 26 der elektronischen Recheneinrichtung 20, Sendedaten bereitgestellt, welche die Bewegung charakterisieren. Diese Sendedaten sind in FIG 1 besonders schematisch dargestellt und mit 28 bezeichnet.

Bei dem dritten Schritt S3 des Verfahrens werden mittels der elektronischen Recheneinrichtung 20, insbesondere mittels einer in FIG 1 besonders schematisch dargestellten Empfangseinrichtung 30 der elektronischen Recheneinrichtung 20, Schnittwertdaten, insbesondere automatisch, empfangen, wobei die Schnittwertdaten in FIG 1 besonders schematisch dargestellt und mit 32 bezeichnet sind. Die Schnittwertdaten sind beziehungsweise werden von einer von der elektronischen Recheneinrichtung 20 unterschiedlichen, zusätzlich zu der elektronischen Recheneinrichtung 20 vorgesehenen und bezüglich der elektronischen Recheneinrichtung 20 und bezüglich der Werkzeugmaschine 10 externen Einrichtung 34 (FIG 1) bereitgestellt, sodass beispielsweise die Schnittwertdaten 32 von der Einrichtung 34 an die elektronische Recheneinrichtung 20 übermittelt und von der elektronischen Recheneinrichtung 20 empfangen werden. Die Einrichtung 34 ist beispielsweise eine weitere Recheneinheit. Bei dem zweiten Schritt S2 werden die Sendedaten 28 beispielsweise von der elektronischen Recheneinrichtung 20 an die Einrichtung 34 übermittelt und von der Einrichtung 34, insbesondere von einer Empfangseinheit 36 der Einrichtung 34, empfangen. Bei dem dritten Schritt S3 werden die Schnittwertdaten beispielsweise von der Einrichtung 34 mittels einer Sendeeinheit 38 der Einrichtung 34 bereitgestellt und insbesondere an die elektronische Recheneinrichtung 20 übermittelt. Die Schnittwertdaten 32 werden dabei von der Einrichtung 34 in Abhängigkeit von den bereitgestellten und insbesondere von der Einrichtung 34 empfangenen Sendedaten 28 bereitgestellt. Die Schnittwertdaten 32 charakterisieren dabei wenigstens einen Schnittwert zum Betreiben der Werkzeugmaschine 10, insbesondere des Antriebs 14.

Bei einem vierten Schritt S4 des Verfahrens wird mittels der elektronischen Recheneinrichtung 20 wenigstens ein Wert der Variablen in Abhängigkeit von den empfangenen Schnittwertdaten 32 eingestellt. Bei dem Wert handelt es sich vorzugsweise um den durch die Schnittwertdaten 32 charakterisierten Schnittwert. Der Schnittwert ist beispielsweise ein Geschwindigkeitswert des Vorschubs beziehungsweise der Vorschub und/oder ein Drehzahlwert der Drehzahl beziehungsweise die Drehzahl, sodass beispielsweise in Abhängigkeit von den empfangenen Schnittwertdaten 32 der zuvor genannte Vorschub und/oder die zuvor genannte Drehzahl mittels der elektronischen Recheneinrichtung 20, insbesondere automatisch und somit beispielsweise ohne aktives Zutun der genannten Person, eingestellt wird. Bestätigt dann beispielsweise die Person den eingestellten Schnittwert, insbesondere derart, dass die Person die elektronische Recheneinrichtung 20 beziehungsweise die Werkzeugmaschine 10 derart bedient, dass das Bearbeiten des Werkstücks 12 gestartet wird, so wird dann beispielsweise das Werkzeug 16 mittels des Antriebs 14 in Abhängigkeit von der Variablen, insbesondere in Abhängigkeit von dem eingestellten Wert der Variablen, bewegt.

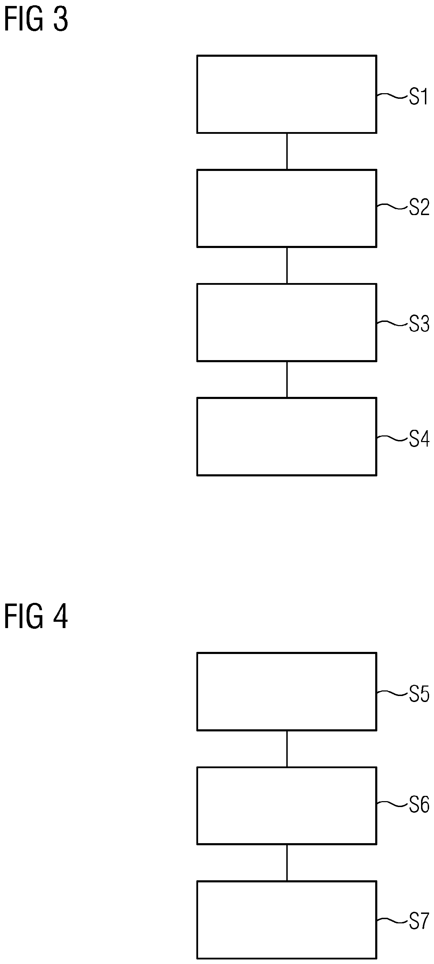

Schließlich zeigt FIG 3 ein Flussdiagramm zum Veranschaulichen eines Verfahrens zum Bereitstellen von Schnittwertdaten zum Betreiben der Werkzeugmaschine 10. Während somit beispielsweise in FIG 2 ein Verfahren zum Betreiben der Werkzeugmaschine 10, insbesondere der elektronischen Recheneinrichtung 20, veranschaulicht ist, ist in FIG 3 ein Verfahren zum Betreiben der Einrichtung 34 veranschaulicht. Bei einem ersten Schritt S5 empfängt die vorzugsweise als elektronische Recheneinheit ausgebildete Einrichtung 34 die von der elektronischen Recheneinrichtung 20 bereitgestellten Sendedaten 28, welche die mittels des Antriebs 14 zu bewirkende und zum Bearbeiten zumindest des Teilbereichs T des Werkstücks 12 vorgesehene Relativbewegung zwischen dem Werkzeug 16 und dem Werkstück 12 charakterisieren. Bei einem zweiten Schritt S6 wird mittels der Einrichtung 34 in Abhängigkeit von den empfangenen Sendedaten 28 der Schnittwert zum Bearbeiten zumindest des Teilbereichs T ermittelt. Bei einem dritten Schritt S7 des Verfahrens wird mittels der Einrichtung 34 die den ermittelten Schnittwert charakterisierenden Schnittwertdaten 32 festgestellt, das heißt an die elektronische Recheneinrichtung 20 übermittelt.

Insgesamt ist erkennbar, dass durch das jeweilige Verfahren der Wert, insbesondere der Schnittwert, der Variablen auf besonders einfache, zeit- und kostengünstige Weise und insbesondere automatisch eingestellt werden kann, ohne dass die Person die Eingabe sowohl in die elektronische Recheneinrichtung 20 als auch in die Einrichtung 34 ausführen muss. Auf diese Weise kann das Werkstück 12 zeit- und kostengünstig bearbeitet werden.

## Patentansprüche

1. Verfahren zum Betreiben einer Werkzeugmaschine (10), welche wenigstens einen Antrieb (14)aufweist, mittels welchem in Abhängigkeit von wenigstens einer Variablen eine Relativbewegung zwischen zumindest einem Werkzeug (16) und zumindest einem Werkstück (12) bewirkbar ist, um dadurch das Werkstück (12) mittels des Werkzeugs (16) zu bearbeiten, mit den Schritten:
- mittels einer elektronischen Recheneinrichtung (20): Empfangen wenigstens einer durch eine Person bewirkten Eingabe, welche die mittels des Antriebs (14) zu bewirkende und zum Bearbeiten zumindest eines Teilbereiches (T) des Werkstücks (12) vorgesehene Relativbewegung zwischen dem Werkzeug (16) und dem Werkstück (12) charakterisiert;
- mittels der elektronischen Recheneinrichtung (20): Bereitstellen von Sendedaten (28), welche die Bewegung charakterisieren;
- mittels der elektronischen Recheneinrichtung (20) und in Abhängigkeit von dem Bereitstellen der Sendedaten (28): Empfangen von von einer von der elektronischen Recheneinrichtung (20) unterschiedlichen Einrichtung (34) in Abhängigkeit von den bereitgestellten Sendedaten (28) bereitgestellten Schnittwertdaten (32), welche wenigstens einen Schnittwert charakterisieren; und
- mittels der elektronischen Recheneinrichtung (20): Einstellen wenigstens eines Werts der Variablen in Abhängigkeit von den empfangenen Schnittwertdaten (32).

2. Verfahren nach Anspruch 1,
wobei die Sendedaten (28) auch wenigstens eine Antriebsleistung des Antriebs (14) charakterisieren.

3. Verfahren nach Anspruch 1 oder 2,
wobei die Sendedaten (28) auch tatsächliche Ist-Maße des Werkzeugs (16) charakterisieren.

4. Verfahren nach einem der vorhergehenden Ansprüche,
wobei die Sendedaten (28) auch einen Zustand, insbesondere einen Verschleißzustand, des Werkzeugs (16) charakterisieren.

5. Verfahren nach einem der vorhergehenden Ansprüche,
wobei die Sendedaten (28) auch eine Montage des Werkzeugs (16) an einem Werkzeughalter (17) charakterisieren, über welchen das Werkzeug (16) mit dem Antrieb (14) gekoppelt ist.

6. Verfahren nach einem der vorhergehenden Ansprüche,
wobei die Sendedaten (28) auch ein Schmier- und/oder Kühlmittel charakterisieren, welches während des Bearbeitens zu verwenden ist, um das Werkzeug (16) zu kühlen und/oder zu schmieren.

7. Verfahren nach einem der vorhergehenden Ansprüche,
wobei die Sendedaten (28) auch ein Rohmaterial charakterisieren, aus welchem zumindest der zu bearbeitende Teilbereich (T) gebildet ist.

8. Verfahren nach einem der vorhergehenden Ansprüche,
wobei die elektronische Recheneinrichtung (20) die Sendedaten (28) über wenigstens eine physische Leitung und/oder leitungslos, insbesondere per Funk, bereitstellt.

9. Verfahren nach einem der vorhergehenden Ansprüche,
wobei die Schnittwertdaten (32) wenigstens eine rotatorische Geschwindigkeit und/oder wenigstens eine translatorische Geschwindigkeit charakterisieren, mit welcher die Relativbewegung zwischen dem Werkzeug (16) und dem Werkstück (12) mittels des Antriebs (14) zu bewirken ist.

10. Werkzeugmaschine (10), mit wenigstens einem Antrieb (14), mittels welchem zumindest eine Relativbewegung zwischen zumindest einem Werkzeug (16) und einem Werkstück (12) bewirkbar ist, um dadurch das Werkstück (12) zu bearbeiten.

11. Computerprogramm, umfassend Befehle, die bewirken, dass die Werkzeugmaschine (10) nach Anspruch 10 das Verfahren nach einem der Ansprüche 1 bis 19 ausführt.

12. Computerlesbares Medium, auf dem das Computerprogramm nach Anspruch 11 gespeichert ist.

13. Verfahren zum Bereitstellen von Schnittwertdaten (32) zum Betreiben einer Werkzeugmaschine (10), mit den Schritten:
- mittels einer elektronischen Recheneinheit (34): Empfangen von von einer von der elektronischen Recheneinheit (34) unterschiedlichen und zum Betreiben der Werkzeugmaschine (10) ausgebildete elektronischen Recheneinrichtung (20) bereitgestellten Sendedaten (28), welche wenigstens eine mittels eines Antriebs (14) der Werkzeugmaschine (10) zu bewirkende und zum Bearbeiten zumindest eines Teilbereiches (T) eines Werkstücks (12) vorgesehene Relativbewegung zwischen einem mittels des Antriebs (14) der Werkzeugmaschine (10) bewegbaren Werkzeug (16) und dem Werkstück (12) charakterisieren;
- mittels der elektronischen Recheneinheit (34) und in Abhängigkeit von den empfangenen Sendedaten (28): Ermitteln wenigstens eines Schnittwerts zum Bearbeiten zumindest des Teilbereiches (T); und
- mittels der elektronischen Recheneinheit (34): Bereitstellen der Schnittwertdaten (32), welche den ermittelten Schnittwert charakterisieren.

14. Computerprogramm, umfassend Befehle, die bei der Ausführung des Computerprogramms durch einen Computer diesen veranlassen, das Verfahren nach Anspruch 13 auszuführen.

15. Computerlesbares Medium, auf dem das Computerprogramm nach Anspruch 14 gespeichert ist.
